# EUROPEAN PATENT APPLICATION

(11) **EP 1 452 774 A2**
(43) Date of publication of application: **01.09.2004**
(21) Application number: 03253369.7
(22) Date of filing: 29.05.2003
(51) Int. Cl.: F16H 7/08

(54) **Blade-Type Tensioner**

(30) Priority: 26.02.2003 JP 2003048995
(71) Applicant: BorgWarner Morse TEC Japan K.K., Nabari City Mie-Prefecture 518-0495 (JP)
(72) Inventor: Yonezawa, Shinichi, c/o BorgWarner TEC Japan K.K., Mie 518-0495 (JP); Sakamoto, Naoji, c/o BorgWarner TEC Japan K.K., Mie 518-0495 (JP)
(74) Representative: Lerwill, John

(57) **Abstract**

A blade-type tensioner (1) for applying tension to a chain comprising a base (4), an arcuately shaped blade shoe (2) having a chain sliding face (2a), a spring (3) provided on a back side of the blade shoe (2), and a guide member. The blade shoe (2) has a proximal end portion (20) and a distal end portion (21), where the proximal end portion (20) is swingably supported on the base (4), and the distal end portion (21) is slidably supported on a slide plate (41) of the base (4). The distal end portion (21) of the blade shoe (2) is guided by a self-aligning action of the slide plate (41) in such a way that the distal end portion (21) is centrally positioned in a lateral direction on the slide plate (41).

## Description

### FIELD OF THE INVENTION

The invention pertains to the field of blade tensioners. More particularly, the invention pertains to a blade tensioner with a blade shoe that is self aligning.

### DESCRIPTION OF RELATED ART

A blade-type tensioner is used to impart tension on a chain. A blade-type tensioner generally includes a plastic blade shoe with an arcuately curved chain sliding face, a plurality of leaf-spring-shaped blade springs provided opposite the chain sliding face, and a metal base that swingably supports a proximal end portion of the blade shoe and that slidably supports a distal end portion of the blade shoe. During operation, a chain slides and travels along the chain sliding face of the blade shoe and a resilient force due to the elastic deformation of the blade shoe and the blade spring is applied to the chain through the blade shoe and proper chain tension is maintained.

In prior art Japanese patent publication no. 2000-234656, a blade tensioner having a pair of guide portions is provided on the base to guide the travel of the distal end portion of the blade shoe when the distal end portion slides on the base. These guide portions are formed integral with the slide surface on the opposite edge portions thereof and are bent along a direction perpendicular to the slide surface. Each guide portion has a convexly curved surface on the opposing side to the distal end portion of the blade shoe, thereby decreasing the sliding resistance between each guide portion and blade shoe, allowing smooth movement of the blade shoe to occur. The convexly curved surface of the guide portion is generally formed by ironing the guide portion several times prior to bending, making the manufacturing of the prior art blade tensioner laborious.

### SUMMARY OF THE INVENTION

The present invention is directed to a blade-type tensioner for applying tension to a chain comprising a base, an arcuately shaped blade shoe having a chain sliding face swingably supported on the base, and a leaf-shaped blade spring provided on the back side of the chain sliding face of the blade shoe. The distal end portion of the blade shoe is slidably supported by a slide plate provided on the base. The slide plate is arcuately curved to have a concavely arcuate arc surface opposite the distal end portion of the blade shoe. The distal end portion of the blade shoe has a convexly arcuate arc surface that corresponds to the concavely arcuate arc surface of the slide plate.

During operation, the distal end portion of the blade shoe comes in contact with and slides on the slide plate, specifically the convexly arcuate arc face of the distal end portion of the blade shoe contacts the concavely arcuate arc face of the slide plate. The concavely arcuate arc face of the slide plate performs a guiding function as a result of a self-aligning action that takes place relative to the convexly arcuate arc face of the distal end portion of the blade shoe. As a result, as the distal end portion of the blade shoe slides on the slide plate, the distal end portion of the blade shoe is constantly guided in such a way that the distal end portion is centrally positioned in a lateral direction on the slide plate. The slide plate is arcuately bent to aid in guiding the distal end portion of the blade shoe. The slide plate is bent and deformed by only one bending process decreasing laborious manufacturing.

In a second embodiment, the distal end portion of the blade shoe has a convexly circular arc face, and the slide plate has at least two flat planes that intersect each other and contact the convexly circular arc face of the distal end portion of the blade shoe. The bending of the slide plate in a flat V-shape is conducted by a single bending work. Thereby, laborious work such as ironing work does not need to be applied to the base, thus decreasing the work or manufacturing of the whole tensioner. During operation, the distal end portion of the blade shoe contacts and slides on the slide plate and each of the two flat planes of the slide plate guides the movement of the distal end portion of the blade shoe in the lateral direction on the slide plate. Thereby, the distal end portion of the blade shoe is constantly guided in such a way that the distal end portion is centrally positioned in a lateral direction on the slide plate.

In a third embodiment, the distal end portion of the blade shoe has a protrusion extending longitudinally and formed centrally in the width direction, and the slide plate has a groove formed therein to slidably receive the protrusion of the blade shoe. The protrusion and grooving of the slide plate are formed of plastic, which is easy to produce, decreasing the laborious work such as ironing that need be applied to the tensioner. During operation, the distal end portion of the blade shoe contacts and slides on the slide plate, the protrusion of the blade shoe is engaged with the groove of the slide plate. Thereby, the distal end portion of the blade shoe is constantly guided in such a way that the distal end portion is centrally positioned in a lateral direction on the slide plate.

In a fourth embodiment, the distal end portion of the blade shoe has a groove extending longitudinally and formed centrally in the width direction, and the slide plate has a protrusion formed thereon to slidably engage with the groove of the blade shoe. Forming the protrusion on the slide plate is easily conducted by press working and the grooving of a distal end portion of the blade shoe is easily conducted by plastic forming, decreasing the laborious work such as ironing that need be applied to the tensioner. During operation, the distal end portion of the blade shoe contacts and slides on the slide plate, the protrusion of the slide plate is engaged with the groove of the blade shoe. Thereby, the distal end portion of the blade shoe is constantly guided in such a way that the distal end portion is centrally positioned in a lateral direction on the slide plate.

In a fifth embodiment, the distal end portion of the blade shoe has a pair of guide portions formed integrally therewith and hanging from the opposite edges of the blade shoe below the opposite sides of the slide plate. During operation, the distal end portion of the blade shoe contacts and slides on the slide plate, each guide portion hanging from the opposite edges of the distal end portion of the blade shoe guides the movement of the distal end portion of the blade shoe on the slide plate in the lateral direction. Since the a guide portion is formed integrally with the opposite edges of the distal end portions of the blade shoe, laborious work such as ironing does not need to be applied to the base of the tensioner.

In a sixth embodiment, the distal end portion of the blade shoe has a through hole penetrating thereinto in the shoe-width direction. A U-shaped guide member with a pair of guide portions hanging below the opposite side ends of the slide plate is inserted into the through hole. During operation, the distal end portion of the blade shoe contacts and slides on the slide plate, each guide portion of the U-shaped guide member is inserted into the through hole of the distal end portion of the blade shoe and guides the movement of the distal end portion of the blade shoe laterally on the slide plate. Since the U-shaped guide member is inserted into the through hole of the distal end portion of the blade shoe, laborious work such as ironing does not need to be applied to the base of the tensioner.

In a seventh embodiment, each of the proximal and distal end portions of the blade shoe have grooves to receive each end portion of the blade spring. Each groove of the blade shoe has a recess formed therein to prevent each end portion of the blade spring from contacting the blade shoe. The recess on the distal end side of the blade shoe has a U-shaped guide member inserted thereinto. The U-shaped guide member has a pair of guide portions below the opposite sides of the slide plate. During operation, the distal end portion of the blade shoe contacts and slides on the slide plate, each guide portion of the U-shaped guide member is inserted into the recess of the distal end portion of the blade shoe and guides the movement of the distal end portion of the blade shoe laterally on the slide plate. Since, U-shaped guide member is inserted into the recess of the distal end portion of the blade shoe laborious work such as ironing work does not need to be applied to the base of the tensioner.

### BRIEF DESCRIPTION OF THE DRAWING

FIG. 1 is a side view of a blade-type tensioner according to a first embodiment of the present invention.
FIG. 2 is an end view of a portion of a blade-type tensioner of FIG. 1, viewed from the direction of an arrow mark II.
FIG. 3 is a side view of a blade-type tensioner according to a second embodiment of the present invention.
FIG. 4 is an end view of a portion of a blade-type tensioner of FIG. 3, viewed from the direction of an arrow mark IV.
FIG. 5 is a side view of a blade-type tensioner according to a third embodiment of the present invention.
FIG. 6 is a cross sectional view of FIG. 5 taken along line VI-VI.
FIG. 7 is a side view of a blade-type tensioner according to a fifth embodiment of the present invention.
FIG. 8 is an end view of a portion of a blade-type tensioner of FIG.7, viewed from the direction of an arrow mark VIII.
FIG. 9 is a side view of a blade-type tensioner according to a sixth embodiment of the present invention.
FIG. 10 is an end view of a portion of a blade-type tensioner of FIG.9, viewed from the direction of an arrow mark X.
FIG. 11 is a side view of a blade-type tensioner according to a seventh embodiment of the present invention.
FIG. 12 is an end view of a portion of a blade-type tensioner of FIG. 11, viewed from the direction of an arrow mark XII.

### DETAILED DESCRIPTION OF THE INVENTION

### First Embodiment

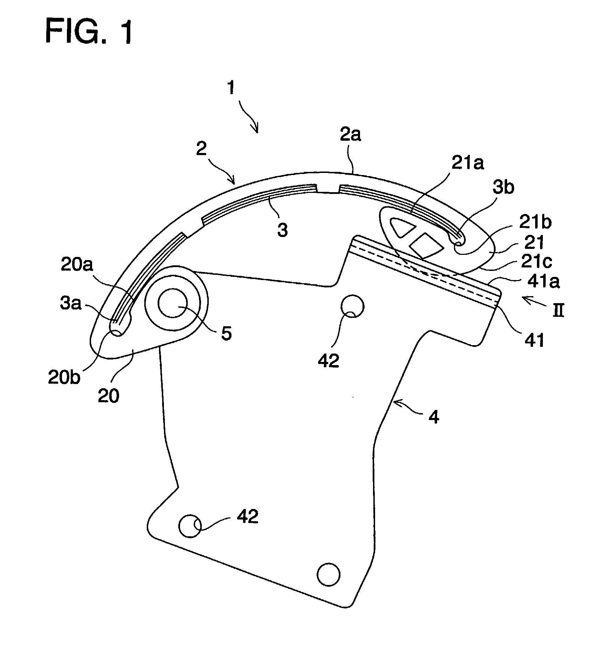

As shown in Figure 1, a blade-type tensioner 1 is comprised of an arcuately curved plastic blade shoe 2 with a chain sliding face 2a, a plurality of leaf-spring shaped blade springs 3 provided and laminated on the opposite side of the chain sliding face 2a adapted to impart tension to a chain (not shown) through the blade shoe 2, and a metal base 4 to which the blade shoe 2 is attached.

The blade show has a proximal and distal end. The proximal end portion 20 of the blade shoe 2 has a shoulder bolt or pin 5 inserted thereinto, one end of which is fixed to the base 4. The blade shoe 2 is swingable around the pin 5. The proximal end portion 20 of the blade shoe 2 is formed with a groove 20a having a recess 20b. The distal end portion 21 of the blade shoe 2 is slidably supported on a slide plate 41 formed integrally with the base 4. Similarly, the distal end portion 21 of the blade shoe 2 is formed with a groove 21 a having a recess 21b.

One end of the blade spring 3 is inserted into the groove 20a of the proximal end portion 20 of the blade shoe 2, and the other end thereof is inserted into the groove 21 a of the distal end portion 21 of the blade shoe 2. Since each groove 20a, 21 a has a recess 20b, 21b formed therein respectively, the distal edge portions of the blade spring 3 are prevented from directly contacting the blade shoe 2.

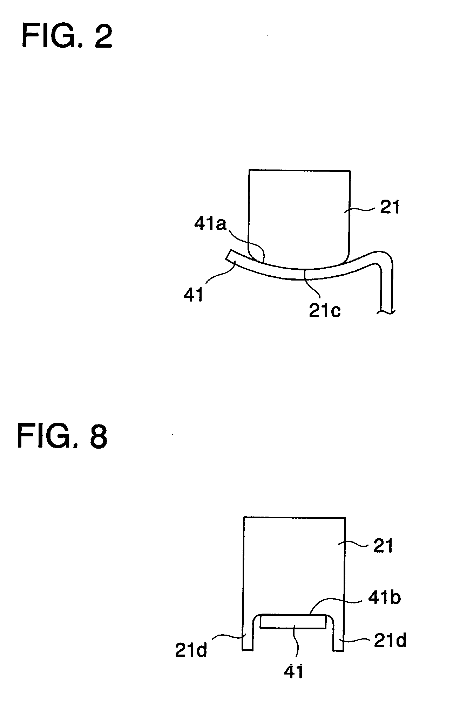

The slide plate 41, shown in Figure 2, is arcuately curved and has a concave arc face 41 a on the opposing side to the distal end portion 21 of the blade shoe 2. The distal end portion 21 of the blade shoe 2 is formed with a convex arc face 21 c that corresponds to the concave arc face 41 a of the slide plate 41.

During operation of the blade tensioner 1, a chain (not shown) slides on and travels along the chain sliding face 2a of the blade shoe 2. During this time, a resilient restitutive force due to elastic deformation of the blade spring 3 is imparted on the chain. During deformation of the blade shoe 2 and the blade spring 3, the distal end portion 21 of the blade shoe 2 slides along the slide plate 41 with the distal end portion 21 in contact with the slide plate 41 of the base 4. At this time, the convex arc face 21 c of the distal end portion 21 of the blade shoe 2 is in contact with the concave arc face 41 a of the slide plate 41. The concave arc face 41 a of the slide plate 41 exercises a guiding function due to its self-aligning action relative to the convex arc face 21 c of the distal end portion 21 of the blade shoe 2. As a result, the distal end portion 21 of the blade shoe 2, which is constantly guided such that it is centrally located in the lateral direction (as shown in Figure 2) on the slide plate 41, slides and travels along the slide plate 41. The arcuately curved slide plate 41 exercises the guiding function of the distal end portion 21.

### Second Embodiment

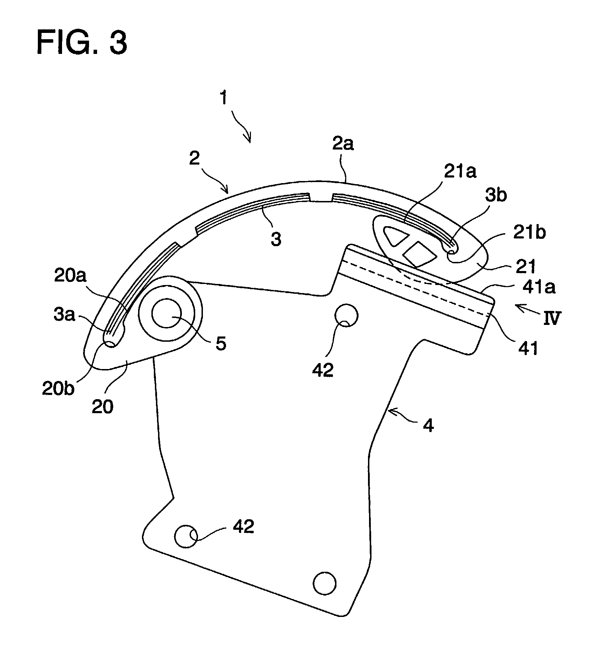

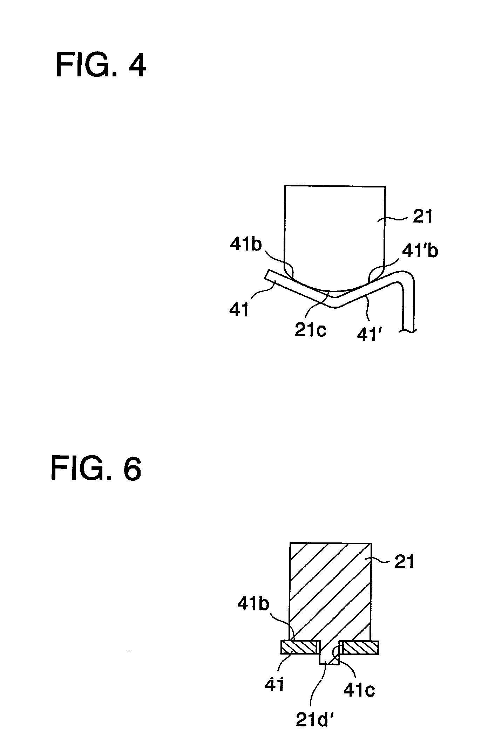

Figures 3 and 4 show a blade-type tensioner of a second embodiment of the present invention. In these drawings, like reference numbers indicate identical or functionally similar elements to those in the first embodiment. The slide plate of the blade tensioner is formed of a pair of slide plates 41, 41' that are bent in a flat V-shape. Slide plates 41, 41' have been bent to intersect each other are formed by a single bending process. Therefore, laborious work such as ironing work does not need to be applied to the base.

During operation, the distal end portion 21 of the blade shoe 2 contacts and slides along the slide plates 41, 41' of the base 4. At this time, the convexly circular arc face 21 c of the distal end portion 21 of the blade shoe is in contact with each of the flat surfaces 41b, 41'b that intersect to form a V-shape on the slide plate 41, 41'. When the distal end portion 21 of the blade shoe 2 slides along the slide plate 41 and exerts force to the slide plates 41, 41', each of the flat surfaces 41b, 41'b keeps the distal end portion 21 is centrally located on the slide plate 41, 41' in the lateral direction.

### Third Embodiment

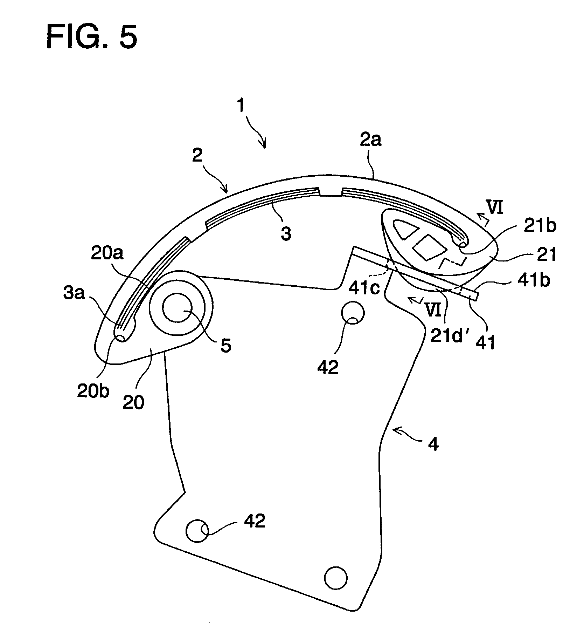

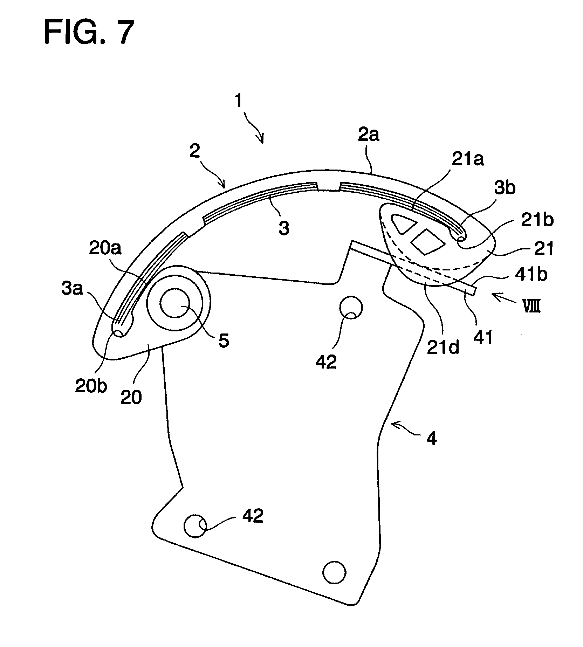

Figures 5 and 6 show the third embodiment of the present invention. In these drawings, like reference numbers indicate identical or functionally similar elements to those in the first and second embodiments. The distal end portion 21 of the blade shoe has a protrusion 21d' extending longitudinally and formed centrally in the width direction(or left to right direction in FIG. 6). The slide plate 41 has a groove 41 c formed therein to receive the protrusion 21d' slidably. The protrusion 21d' extends downwardly below the groove 41 c. The protrusion 21d' and the grooving of the slide plate 41 are preferably made out of plastic, decreasing laborious work such as ironing.

During operation, the distal end portion 21 of the blade shoe 2 contacts and slides along flat surface 41b of the slide plate 41. At this time, the protrusion 21d' formed in the central position of the distal end portion 21 of the blade shoe 2 is in engagement with the groove 41 c of the slide plate 41. As a result, when the distal end portion 21 of the blade shoe 2 slides along the slide plate 41, the distal end portion 21 is guided so as to be centrally located in the lateral direction on the slide plate 41.

### Fourth Embodiment

A fourth embodiment (not shown) is a variant of the third embodiment. In contrast to the third embodiment, slide plate 41 has a protrusion and the distal end portion 21 of the blade shoe 2 has a longitudinally extending groove to receive the protrusion to be engaged therewith.

During operation, the distal end portion 21 of the blade shoe 2 may be located in the laterally central position on the slide plate 41. Press forming of the protrusion on the slide plate 41 and grooving of the distal end portion 21 of the blade shoe are easily conducted. Thereby, working process of the base, and thus, the whole blade tensioner becomes easy.

### Fifth Embodiment

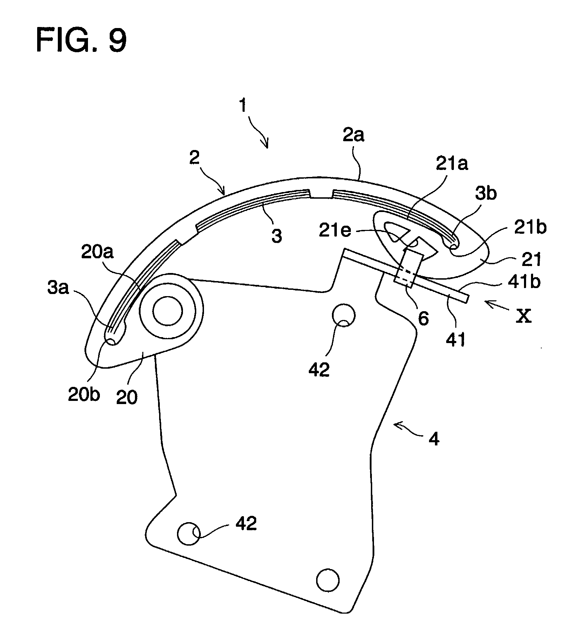

Figures 7 and 8 show a fifth embodiment of the present invention. In these drawings, like reference numbers indicate identical or functionally similar elements to those in the first embodiment. The distal end portion 21 of the blade shoe 2 has a pair of guide portions 21d provided on opposite sides of the distal end portion 21 and hanging from the opposite side edges of the distal end portion 21. The slide plate 41 has a flat surface 41b on the opposing side to the distal end portion 21 of the blade shoe 2. Each of the guide portions 21 d of the distal end portion 21 of the blade shoe 2 are formed integrally with the blade shoe 2 at the time of plastic molding of the blade shoe 2, and extend below the opposite sides of the slide plate 41.

During operation, the distal end portion 21 of the blade shoe 2 slides along the slide plate 41 with the distal end portion 21 contacting the flat surface 41b of the slide plate 41 of the base 4. At this time, each guide portion 21d constantly guides the movement of the distal end portion 21 of the blade shoe 2 on the slide plate 41 in the lateral direction, such that the distal end portion 21 is located centrally in the lateral direction on the slide plate 41. The guide portions 21d exercise the guiding function of the distal end portion 21 of the blade shoe 2.

### Sixth Embodiment

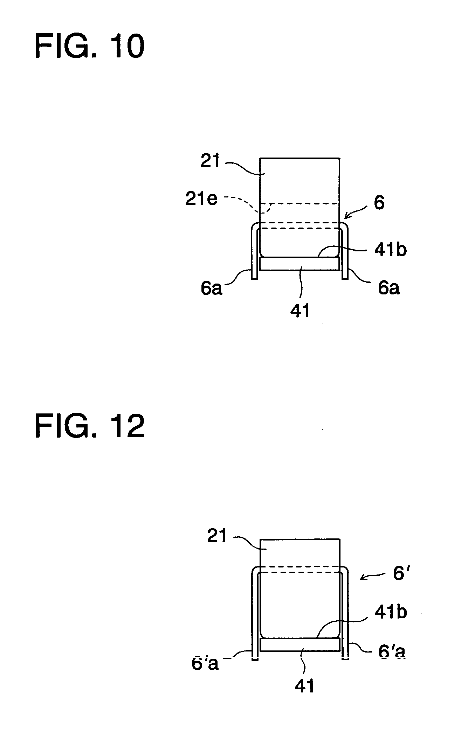

Figures 9 and 10 show a sixth embodiment of the present invention. In these drawings, like reference numbers indicate identical or functionally similar elements to those in the first and second embodiment. The distal end portion 21 of the blade shoe 2 has a through hole 21e that extends through the distal end portion 21 in the lateral direction in Figure 6. A U-shaped guide member 6 containing a pair of guide portions 6a is provided on opposite sides of the guide member 6. The guide portions 6a extend below the opposite side ends of the slide plate 41 are inserted into the through hole 21 e. The guide member 6 is preferably formed by folding a sheet metal into a U-shape.

During operation, the distal end portion 21 of the blade shoe 2 slides along the slide plate 41 with the distal end portion 21 contacting the flat surface 41b of the slide plate 41 of the base 4. At this time, each guide portion 6a of the U-shaped guide member 6 extends through the through hole 21 e of the distal end portion 21 of the blade shoe 2 and constantly guides the movement of the distal end portion 21 of the blade shoe 2 laterally on the slide plate 41, such that the distal end portion 21 is centrally located in the lateral direction on the slide plate 41. The U-shaped guide piece 6 exercise the guiding function of the distal end portion 21 of the blade shoe 2.

### Seventh Embodiment

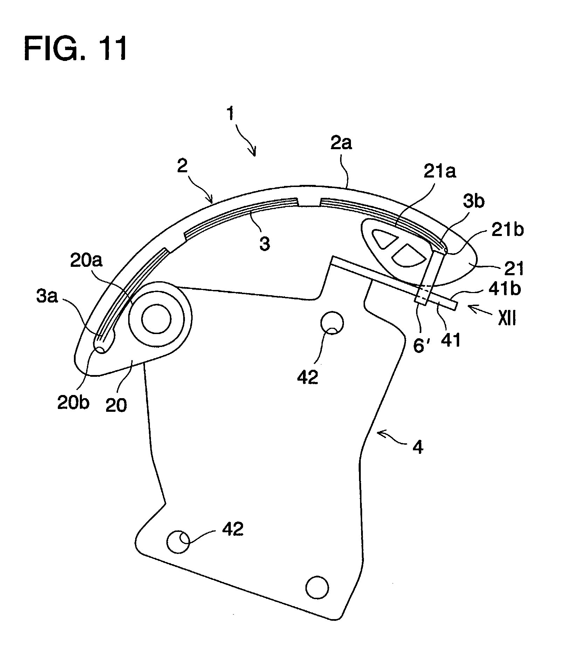

Figures 10 and 11 show a seventh embodiment of the present invention. In these drawings, like reference numbers indicate identical or functionally similar elements to those in the first through the third embodiment. The U-shaped guide member 6', contains a pair of guide portions 6'a provided on opposite sides of the guide member 6', which extend below the opposite side ends of the slide plate 41 is inserted into the recess 21b of the distal end portion 21 of the blade shoe 2. The guide member 6', is preferably formed by folding a sheet metal into a U-shape.

During operation, the distal end portion 21 of the blade shoe 2 slides along the slide plate 41 with the distal end portion 21 contacting the flat surface 41b of the slide plate 41 of the base 4. At this time, each guide portion 6'a of the U-shaped guide member 6' guides the movement of the distal end portion 21 of the blade shoe 2 laterally on the slide plate 41 such that the distal end portion 21 is centrally located in the lateral direction on the slide plate 41. The U-shaped guide piece 6' exercises the guiding function of the distal end portion 21 of the blade shoe 2.

In each of the above-mentioned embodiments, the slide plate 41 is integrated with the base 4 by folding a part of the base 4. Furthermore, the slide plate made discretely from the base 4 may be attached to the base 4 by a known fixing means such as welding or fastening bolts.

Accordingly, it is to be understood that the embodiments of the invention herein described are merely illustrative of the application of the principles of the invention. Reference herein to details of the illustrated embodiments is not intended to limit the scope of the claims, which themselves recite those features regarded as essential to the invention.

## Claims

1. A blade-type tensioner for applying tension to a chain, comprising:
a base having a slide plate;
an arcuately shaped blade shoe having a chain sliding face, a proximal end portion and a distal end portion, the proximal end portion being swingably supported on the base, the distal end portion being slidably supported on the slide plate of the base;
a spring provided at a back side of the blade shoe; and
a guide member comprising two flat planes formed integrally with the slide plate that intersect to form a V-shape, wherein a convexly circular arc face of the distal end portion of the blade shoe contacts each of the flat two planes to guide the distal end portion such that it is centrally positioned on the slide plate.

2. A blade-type tensioner for applying tension to a chain, comprising:
a base having a slide plate;
an arcuately shaped blade shoe having a chain sliding face, a proximal end portion and a distal end portion, the proximal end portion being swingably supported on the base, the distal end portion being slidably supported on the slide plate of the base and having a protrusion extending out therefrom;
a spring provided at a back side of the blade shoe; and
a guide member comprising a groove extending longitudinally and formed centrally in the width direction on the slide plate to slidably receive the protrusion on the distal end portion of the blade shoe, such that as the distal end portion of the blade shoe slides along the slide plate, the distal end portion is guided and centrally positioned on the slide plate.

3. A blade-type tensioner for applying tension to a chain, comprising:
a base having a slide plate with a protrusion extending out therefrom;
an arcuately shaped blade shoe having a chain sliding face, a proximal end portion and a distal end portion, the proximal end portion being swingably supported on the base, the distal end portion being slidably supported on the slide plate of the base;
a spring provided at a back side of the blade shoe; and
a guide member comprising a groove extending longitudinally and formed centrally in the width direction on the distal end portion of the blade shoe for receiving the protrusion of the slide plate, such that as the distal end portion of the blade show slides along the slide plate, the distal end portion is guided and centrally positioned on the slide plate.
